Europäisches Patentamt

European Patent Office

Office européen des brevets

Veröffentlichungsnummer: **0 288 036**

**A2**

# EUROPÄISCHE PATENTANMELDUNG

Anmeldenummer: 88106324.2

Anmeldetag: 20.04.88

Int. Cl.4 **C21D 1/56 , C21D 1/64**

Priorität: 21.04.87 DE 3713401

Veröffentlichungstag der Anmeldung:
26.10.88 Patentblatt 88/43

Benannte Vertragsstaaten:
DE ES FR GB IT

Anmelder: **Korf Engineering GmbH**
**Neusser Strasse 111**
**D-4000 Düsseldorf 1(DE)**

Erfinder: **Müller, Peter**
**Birkenhofstrasse 6**
**D-4040 Neuss 22(DE)**

Vertreter: **Pfenning, Meinig & Partner**
**Mozartstrasse 17**
**D-8000 München 2(DE)**

Verfahren zur Abkühlung erwärmten Materials und Vorrichtung zur Durchführung des Verfahrens.

Es wird ein Verfahren zur Abkühlung erwärmten Materials wie Walzgut durch ein flüssiges Kühlmittel beschrieben, wobei das erwärmte Kühlmittel anschließend unter Nutzung der hierdurch gewonnenen Wärme abgekühlt wird. Hierzu wird das Kühlmittel in einem Kreislauf geführt. Als Kühlmittel wird eine ternäre Pb-Sn-Bi-Legierung verwendet. Eine bevorzugte Vorrichtung zur Durchführung dieses Verfahrens weist ein Abkühlungsbad (2) für das erwärmte Material und ein Erwärmungsbad (3) für die Abkühlung des Kühlmitels auf, wobei beide Bäder hintereinander in den Kreislauf des Kühlmittels eingeschaltet sind. Das Abkühlungsbad dient zweckmäßig zur Kühlung von gewalztem Metall, das vor dem Walzen im Erwärmungsbad erwärmt wurde.

## Verfahren zur Abkühlung erwärmten Materials und Vorrichtung zur Durchführung des Verfahrens

Die Erfindung betrifft ein Verfahren nach dem Oberbegriff des Anspruchs 1 sowie eine Vorrichtung zur Durchführung dieses Verfahrens.

Man ist grundsätzlich bestrebt, sich die bei der Abkühlung erwärmter Materialien auf das Kühlmittel übergegangene Wärme möglichst weitgehend nutzbar zu machen. Bei der Abkühlung stark erwärmter Materialien beispielsweise mit einer Temperatur von etwa 1000° C und Verwendung eines flüssigen Kühlmittels ist es daher zweckmäßig, ein Kühlmittel zu verwenden, daß wegen des Wirkungsgrades der Wärmewiedergewinnung einen niedrigen, der Umgebungstemperatur möglichst nahekommenden Schmelzpunkt sowie einen hohen, weit über der Temperatur des zu kühlenden Materials liegenden Siedepunkt aufweist, damit die Dampfspannung bei dieser Temperatur möglichst gering ist, um die Kühlmittelverluste niedrig zu halten. Der Wirkungsgrad für die Wärmewiedergewinnung ist je größer, desto niedriger die Temperatur des Materials nach der Abkühlung ist; dies bedingt, daß der Schmelzpunkt des flüssigen Kühlmittels möglichst niedrig sein sollte. Das Kühlmittel soll weiterhin eine hohe chemische Stabilität besitzen und für den Fall, daß es mit dem zu kühlenden Material in direkte Berührung gelangt, dieses nicht benetzend sein, da sonst die Gefahr besteht, daß bei der Trennung von Kühlmittel und gekühltem Material dieses einen Teil des Kühlmittels mitnimmt und dadurch relativ hohe Verluste von diesem entstehen, und daß zudem eine unerwünschte Fremdschichtbildung an der Materialoberfläche auftritt. Schließlich ist auch von Bedeutung, daß zumindest zwischen Kühlmittel und zu kühlendem Material ein guter Wärmeübergang stattfindet, wodurch die Abkühlungsdauer relativ klein gehalten werden kann.

Es ist daher die Aufgabe der vorliegenden Erfindung, ein Verfahren zur Abkühlung erwärmten Materials durch ein flüssiges Kühlmittel und anschließender Abkühlung des erwärmten Kühlmittels unter Nutzung der hierdurch gewonnenen Wärme, wobei das Kühlmittel in einem Kreislauf geführt wird, anzugeben, bei dem insbesondere ein hoher Wirkungsgrad für die Wärmewiedergewinnung erreicht wird, das mit geringem Kühlmittelverlust arbeitet und ein hoher Wärmeübergang erreicht wird, so daß zumindest die Abkühlungszeit relativ kurz ist.

Diese Aufgabe wird erfindungsgemäß durch das im kennzeichnenden Teil des Anspruchs 1 angegebene Merkmal gelöst. Vorteilhafte Weiterbildungen des erfindungsgemäßen Verfahrens sowie Ausführungen einer zweckmäßigen Vorrichtung zur Durchführung dieses Verfahrens ergeben sich aus den Unteransprüchen.

Die ternäre Legierung aus Pb, Sn und Bi hat im Eutektikum eine Zusammensetzung von 33% Pb, 15,5% Sn und 51,5% Bi. Die Schmelztemperatur dieser Legierung liegt bei 97° C und die Siedetemperaturen der einzelnen Bestandteile dieser Legierung betragen mehr als 1450° C. Das Kühlmittel kann somit zwischen Abkühlung und Erwärmung einen Temperaturbereich von 120° bis 1300° C durchlaufen.

Die Zusammensetzung der ternären Pb-Sn-Bi-Legierung liegt vorzugsweise im Bereich des Eutektikums. Wegen des erheblichen Unterschiedes in den Preisen für die einzelnen Metalle dieser Legierung kann es jedoch zweckmäßig sein, von dieser Zusammensetzung abzuweichen und insbesondere einen höheren Bleigehalt zu wählen, wodurch der Schmelzpunkt etwas erhöht wird. Eine Legierung aus 41% Pb, 21% Sn und 38% Bi hat einen Schmelzpunkt von 115° C, der somit nur unwesentlich höher ist als der des Eutektikums; sie liegt im Preis jedoch erheblich niedriger als die eutektische Legierung. Dies ist mit der möglicherweise hierdurch eintretenden Verminderung des Wirkungsgrades der Wärmewiedergewinnung abzuwägen.

Die Metalle des Kühlmittels oxidieren in Anwesenheit von Sauerstoff sehr rasch. Daher ist es vorteilhaft, daß, soweit Gase mit dem Kühlmittel in Berührung gelangen, diese sauerstofffrei sind. Hierzu bietet sich ein inertes Gas wie Stickstoff an. Da eine Oxidation der Legierungsmetalle in der Regel jedoch nicht vollständig unterbunden werden kann, ist es sinnvoll, das Kühlmittel innerhalb des Kreislaufs mit einem Reduktionsmittel in Kontakt zu bringen. Hierfür wird Feinkoks als zweckmäßig angesehen, der auf dem Kühlmittel schwimmt und die gebildeten Metalloxide reduziert, so daß eine sofortige Rückgewinnung der Legierungsmetalle erfolgt.

Die Erfindung wird im folgenden anhand eines in den Figuren dargestellten Ausführungsbeispiels näher erläutert. Diese zeigt in schematischer Wiedergabe eine Abkühlungs-und Wärmewiedergewinnungsanlage für ein Walzwerk.

In einer bekannten Walzanlage 1 wird metallenes Walzgut bei der geeigneten Walztemperatur in die gewünschte Form gewalzt. Die Temperatur des die Walzanlage 1 verlassenden Walzgutes beträgt beispielsweise 900° C. Dieses Walzgut gelangt aus der Walzanlage 1 in ein Abkühlungsbad 2, in dem es auf eine gewünschte Temperatur im Bereich von 130 bis 300° C abgekühlt wird. Diese Temperatur ist von der Zusammensetzung der als Kühlmittel dienenden flüssigen Pb-Sn-Bi-Legierung abhängig.

Vor Eintritt des Walzgutes in die Walzanlage 1 wird es in einem Erwärmungsbad 3 von der Umgebungstemperatur auf die erforderliche Walztemperatur gebracht. Die Erwärmung erfolgt durch Wärmetausch mit dem Kühlmittel für das aus der Walzanlage 1 ausgetretene Walzgut, das durch Wärmetausch mit dem Walzgut im Abkühlungsbad 2 erwärmt wurde und durch eine Leitung 4 zunächst zu einem Nachwärmofen 5 und aus diesem durch eine Leitung 6 zum Erwärmungsbad 3 befördert wird. Im Nachwärmofen 5 wird das Kühlmittel auf eine Temperatur etwas oberhalb der Walztemperatur gebracht, beispielsweise 1200° C. Der Nachwärmofen 5 kann in beliebiger Weise ausgebildet sein, jedoch empfiehlt sich für eine genaue, einfache und schnelle Regelung der Temperatur des Kühlmittels ein Induktionsofen (Kanalofen). Dieser hat den weiteren Vorteil, daß das flüssige Kühlmittel sehr heftig umgewälzt wird.

Das im Erwärmungsbad 3 auf eine Temperatur im Bereich von 130 bis 300° C abgekühlte Kühlmittel wird mittels einer Pumpe 7 durch ein Leitung 8 zum Abkühlungsbad 2 zurückbefördert, in dem es, wie beschrieben, das aus der Walzanlage 1 kommende Walzgut wieder abkühlt. Das Abkühlungsbad 2 und das Erwärmungsbad 3 sind als Gegenstrom-Wärmetauscher ausgebildet.

Das abgekühlte Walzgut gelangt nach Durchlaufen einer Kaltschere 9 zu einer Übergabevorrichtung 10. Besteht das Walzgut aus Stahlstäben, die gerichtet werden müssen, dann sollte seine Temperatur etwa 150° C betragen, da es unzweckmäßig ist, Stahlstäbe mit einer Temperatur von mehr als 160° C zu richten. Die endgültige Abkühlung des Walzgutes auf Umgebungstemperatur findet vorzugsweise in einem nachgeschalteten Wasserbad statt.

Das Abkühlungsbad 2 und das Erwärmungsbad 3 sind in gleicher Weise aufgebaut, wobei die Anforderungen hinsichtlich des Abkühlungsbades 2 etwas geringer sind, da die dort auftretende maximale Temperatur etwa 200 bis 300° C niedriger liegt als diejenige im Erwärmungsbad 3. Die beiden Bäder bestehen jeweils aus einer keramisch ausgekleideten Wanne, durch welche das zu erwärmende bzw. abzukühlende Walzgut mittels einer Hubbalkenvorrichtung schrittweise quer zu seiner Längsachse befördert wird. Dabei ist zu beachten, daß das Walzgut auf dem Kühlmittel schwimmt (spezifisches Gewicht des Kühlmittels ca. 8,5 g.cm³) und damit die Hubbalkenvorrichtung umgekehrt gegenüber dem üblichen Betrieb, d.h. von oben nach unten arbeiten muß.

Der Badraum über dem Kühlmittelspiegel ist völlig abgeschlossen und mit Stickstoff gefüllt, um eine Oxidation des Kühlmitels weitmöglichst zu unterbinden. Hierdurch werden auch' die Wärmeverluste sehr niedrig gehalten. Zu diesem Zweck sind das Abkühlungsbad 2 über eine Leitung 11 und das Erwärmungsbad 3 über eine Leitung 12 mit einer Stickstoffquelle 13 verbunden.

Der geschlossene Badraum ist mit der umgebenden Atmosphäre über jeweils nur zwei Durchgänge verbunden, nämlich denen für den Eintritt und den Austritt des Walzgutes. Diese Durchgänge sind kleinstmöglich ausgelegt und erforderlichenfalls mit Schleusen versehen, um die Stickstoffverluste gering zu halten. Weiterhin sind die Durchgänge mit senkrecht, d.h. von oben nach unten wirkenden Absaugungen versehen, durch die·verhindert wird, daß schädliche Metalldämpfe aus dem Badraum in die umgebende Atmosphäre gelangen.

Vor dem Abkühlungsbad 2 kann eine nicht gezeigte Wendevorrichtung für das eintretende Walzgut vorgesehen sein, damit konkave Flächen eines gewalzten Profils nach oben oder zur Seite weisen, um die Bildung von Luftblasen unter einer derartigen Fläche zu verhindern.

Der Transport des Kühlmittels vom Erwärmungsbad 3 zum Abkühlungsbad 2 kann durch die Pumpe 7 erfolgen, da hier die Temperatur des Kühlmittels am niedrigsten ist. Der Transport vom Abkühlungsbad 2 zum Erwärmungsbad 3 hingegen ist auf diese Weise nicht möglich, da hier wegen der hohen Temperatur des Kühlmittels eine übliche Pumpe für flüssige Metalle nicht eingesetzt werden kann. Zwischen dem Abkühlungsbad 2 und dem Nachwärmofen 5 sowie zwischen diesem und dem Erwärmungsbad 3 ist daher jeweils ein leichtes Gefälle von ca. 0,5 % vorgesehen, so daß das Kühlmittel durch Schwerkraft weiterbefördert wird. Demgemäß muß auch die Walzanlage 1 in einer leichten Schräge aufgebaut werden, d.h. zum Abkühlungsbad 2 hin ist jedes Walzgerüst einige Millimeter höher gelagert als das vorhergehende.

Es kann sinnvoll sein, am Walzgutauslaß der beiden Bäder eine Abbürst-oder Abblasvorrichtung vorzusehen, um die Oberfläche des Walzgutes von Kühlmittelresten zu befreien, bevor es aus dem Badraum austritt. Hierdurch wird die umgebende Atmosphäre vor dem Auftreten giftiger Bleidämpfe bewahrt und die Kühlmittelverluste werden verringert.

Eine langzeitige Oxidation der Kühlmittel-Metalle insbesondere durch Reduktion der verzunderten Oberfläche des Walzgutes kann nicht ausgeschlossen werden. Diese Oxidation kann wieder unmittelbar im Kühlmittelkreislauf rückgängig gemacht werden, indem man in einem oder beiden Bädern eine Schicht Kleinkoks auf das Kühlmittel streut, der etwaige Pb-, Sn-und Bi-Oxide reduziert und damit die sofortige Rückgewinnung dieser Metalle bewirkt.

Die Verwendung der ternären Pb-Sn-Bi-Legierung als Kühlmittel hat weiterhin den Vorteil, daß die Gefahr einer Verzunderung und Entkohlung des Walzgutes bei der Erwärmung und Abkühlung ausgeschlossen ist.

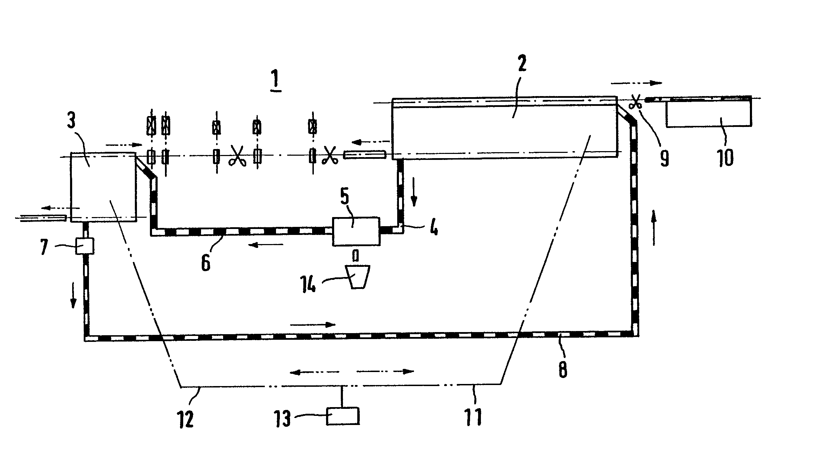

Die in der Figur dargestellte Anlage weist - schließlich noch eine Aufbereitungspfanne 14 für das Kühlmittel auf, in der dieses vor der Einspeisung in den Kreislauf verflüssigt wird.

Die Anlage kann dadurch erweitert werden, daß mehrere Walzanlagen, Stranggußanlagen, Wärmebehandlungsanlagen und dergleichen durch ein gemeinsames Kühlmitteltransportnetz verbunden werden.

Schließlich soll noch darauf hingewiesen werden, daß es insbesondere aus Kostengründen vorteilhaft sein kann, anstelle der ternären Pb-Sn-Bi-Legierung nur Blei als Kühlmittel zum Einsatz zu bringen.

## Ansprüche

1. Verfahren zur Abkühlung erwärmten Materials durch ein flüssiges Kühlmittel und anschließender Abkühlung des erwärmten Kühlmittels unter Nutzung der hierdurch gewonnenen Wärme, wobei das Kühlmittel in einem Kreislauf geführt wird,
**dadurch gekennzeichnet,**
daß als Kühlmittel eine ternäre Pb-Sn-Bi-Legierung verwendet wird.

2. Verfahren nach Anspruch 1, dadurch gekennzeichnet, daß das Kühlmittel zwischen Abkühlung und Erwärmung einen maximalen Temperaturbereich von 120 bis 1300° C durchläuft.

3. Verfahren nach Anspruch 1 oder 2, dadurch gekennzeichnet, daß die Zusammensetzung der ternären Pb-Sn-Bi-Legierung im Bereich ihres Eutektikums liegt.

4. Verfahren nach einem der Ansprüche 1 bis 3, dadurch gekennzeichnet, daß mit dem Kühlmittel in Berührung gebrachte Gase inert sind.

5. Verfahren nach Anspruch 4, dadurch gekennzeichnet, daß als inertes Gas Stickstoff verwendet wird.

6. Verfahren nach einem der Ansprüche 1 bis 5, dadurch gekennzeichnet, daß die ternäre Pb-Sn-Bi-Legierung innerhalb des Kreislaufs mit einem Reduktionsmittel in Kontakt gebracht wird.

7. Verfahren nach Anspruch 6, dadurch gekennzeichnet, daß das Reduktionsmittel Koks ist.

8. Vorrichtung zur Durchführung des Verfahrens nach einem der Ansprüche 1 bis 7, dadurch gekennzeichnet, daß ein Abkühlungsbad (2) für das erwärmte Material und ein Erwärmungsbad (3) für den Entzug von Wärme aus dem Kühlmittel vorgesehen sind, die hintereinander in den Kreislauf (4,6,8) des Kühlmittels eingeschaltet sind.

9. Vorrichtung nach Anspruch 8, dadurch gekennzeichnet, daß in den Kreislauf (4,6,8) zusätzliche Erwärmungs-und/oder Kühleinrichtungen (5) für das Kühlmittel eingeschaltet sind.

10. Vorrichtung nach Anspruch 8 oder 9, dadurch gekennzeichnet, daß das Abkühlungs-(2) und das Erwärmungsbad (3) nach außen luftdicht abgeschirmt und mit einer Stickstoffquelle (13) verbunden sind.

11. Vorrichtung nach einem der Ansprüche 1 bis 10, dadurch gekennzeichnet, daß das Abkühlungsbad (2) zur Kühlung von gewalztem Metall und das Erwärmungsbad (3) zur Erwärmung von zu walzendem Metall vorgesehen sind.

12. Vorrichtung nach Anspruch 11, dadurch gekennzeichnet, daß der Eingang des Abkühlungsbades (2) für das gewalzte Metall mit dem Ausgang einer Walzanlage (1) und der Ausgang des Erwärmungsbades (3) für das zu walzende Metall mit dem Eingang der Walzanlage (1) verbunden sind.

13. Vorrichtung nach einem der Ansprüche 8 bis 12, dadurch gekennzeichnet, daß in dem Zweig (8) des Kreislaufs des Kühlmitels vom Erwärmungsbad (3) zum Abkühlungsbad (2) eine Pumpe (7) angeordnet und in dem Zweig (4,6) vom Abkühlungsbad (2) zum Erwärmungsbad (3) ein Gefälle zum Erwärmungsbad (3) hin vorgesehen sind.

14. Vorrichtung nach Anspruch 13, dadurch gekennzeichnet, daß das Gefälle ca. 0,5 % beträgt.

15. Vorrichtung nach einem der Ansprüche 8 bis 14, dadurch gekennzeichnet, daß das Erwärmungsbad (3) und das Abkühlungsbad (2) als Gegenstromwärmetauscher ausgebildet sind.

16. Vorrichtung nach einem der Ansprüche 12 bis 15, dadurch gekennzeichnet, daß die Walzanlage (1) eine Stahlwalzanlage ist.

17. Vorrichtung nach einem der Ansprüche 13 bis 16, dadurch gekennzeichnet, daß die Walzanlage (1) zu ihrem Ausgang hin leicht ansteigend ausgebildet ist.

18. Vorrichtung nach einem der Ansprüche 8 bis 17, dadurch gekennzeichnet, daß in dem Zweig (4,6) des Kühlmittelkreislaufs vom Abkühlungsbad (2) zum Erwärmungsbad (3) ein Nachwärmofen (5) angeordnet ist.

19. Vorrichtung nach einem der Ansprüche 12 bis 18, dadurch gekennzeichnet, daß zwischen der Walzanlage (1) und dem Abkühlungsbad (2) eine Wendeeinrichtung vorgesehen ist.

20. Vorrichtung nach einem der Ansprüche 8 bis 19, dadurch gekennzeichnet, daß die Durchgänge für den Ein-und Austritt des Materials in das bzw. aus dem Abkühlungs-(2) und/oder Erwärmungsbad (3) über dem Kühlmittelspiegel liegen und nach außen abgedichtet sind.

21. Vorrichtung nach Anspruch 20, dadurch gekennzeichnet, daß die Durchgänge mit Schleusen versehen sind.

22. Vorrichtung nach Anspruch 20 oder 21, dadurch gekennzeichnet, daß die Durchgänge mit in vertikaler Richtung wirkenden Absaugvorrichtungen versehen sind.

23. Vorrichtung nach einem der Ansprüche 8 bis 22, dadurch gekennzeichnet, daß im Abkühlungs-(2) und/oder Erwärmungsbad (3) vor dem Durchgang für den Austritt des Materials eine Reinigungsvorrichtung für dieses angeordnet ist.

24. Verfahren zur Abkühlung erwärmten Materials durch ein flüssiges Kühlmittel und anschließender Abkühlung des erwärmten Kühlmittels unter Nutzung der hierdurch gewonnenen Wärme, wobei das Kühlmittel in einem Kreislauf geführt wird, dadurch gekennzeichnet, daß als Kühlmittel Blei verwendet wird.

0 288 036